# EUROPÄISCHE PATENTSCHRIFT

(11) **EP 1 397 669 B1**
(45) Veröffentlichungstag und Bekanntmachung des Hinweises auf die Patenterteilung: **27.07.2005**
(21) Anmeldenummer: 02732301.3
(22) Anmeldetag: 08.06.2002
(51) Int. Cl.: G01N 21/27, G01N 21/35, G01N 21/65

(54) **VORRICHTUNG UND VERFAHREN ZUR STABILITÄTSBESTIMMUNG VON SUBSTANZEN UND FORMULIERUNGEN**
DEVICE AND METHOD FOR DETERMINING THE STABILITY OF SUBSTANCES AND FORMULATIONS
DISPOSITIF ET PROCEDE PERMETTANT DE DETERMINER LA STABILITE DE SUBSTANCES ET DE COMPOSITIONS

(30) Priorität: 13.06.2001 CH 108201
(43) Veröffentlichungstag der Anmeldung: 17.03.2004
(73) Patentinhaber: RPD Tool AG, 4132 Muttenz (CH)
(72) Erfinder: FEDERER, Beat, CH-8057 Zürich (CH); ROGGLI, Markus, CH-5103 Möriken (CH); ROTH, Martin, CH-4054 Basel (CH)
(74) Vertreter: Spierenburg, Pieter
(86) Internationale Anmeldenummer: PCT/CH2002/000300
(87) Internationale Veröffentlichungsnummer: WO 2002/101363

(56) Entgegenhaltungen:
- WO-A-01/09391
- PATENT ABSTRACTS OF JAPAN vol. 2000, no. 12, 3. Januar 2001 (2001-01-03) -& JP 2000 249654 A (JAPAN SCIENCE & TECHNOLOGY CORP;OJI PAPER CO LTD; ISLAND KOGYO KK; NIK), 14. September 2000 (2000-09-14)

## Beschreibung

Die Erfindung betrifft eine Vorrichtung nach dem Oberbegriff des Patentanspruchs 1 und ein Verfahren nach dem Oberbegriff des Patentanspruchs 8.

Herkömmlicherweise werden physikalische und chemische Stabilitäten von Substanzen und Formulierungen so ermittelt, dass die Substanzen und Formulierungen bei kontrollierten Lagerbedingungen während längerer Zeit gelagert werden. Zu Beginn der Lagerung und in grösseren Zeitabständen (mehreren Wochen, Monaten, Jahren) werden den eingelagerten Substanzen und Formulierungen Proben entnommen, die anschliessend in einem Labor mit physikalischen und chemischen Analysen (chromatographische-, elektrophoretische-, nasschemische- und physikalische Methoden) untersucht werden. Dieses Verfahren zeichnen sich durch verschiedene Nachteile aus:
- Die Durchführung der klassischen physikalischen und chemischen Analysen benötigt in der Regel einen grossen Zeitaufwand, da beispielsweise für chromatographische und elektrophoretische Analysen aufwendige Probenvorbereitungen notwendig sind.
- Für die Durchführung chromatographischer Analysen ist es in der Regel notwendig, dass von den zu untersuchenden Substanzen Referenzmaterial mit bekanntem Gehalt vorhanden ist.
- Das den eingelagerten Substanzen und Formulierungen für die Analysen entnommene Material kann nicht mehr für die weitere Lagerung verwendet werden, da die Proben bei den klassisch physikalischen und chemischen Analysen in den meisten Fällen zerstört wird.
- Aufgrund des grossen Aufwandes können die Analysen nur in grösseren Zeitabständen durchgeführt werden, so dass es sehr lange dauert, um aus den experimentellen Daten Rückschlüsse über die Stabilität der eingelagerten Substanzen und Formulierungen zu gewinnen.

Beispielsweise ist aus DE-A-197 44 061 eine Vorrichtung zum Bestimmen von Arten von Adsorbaten bekannt, bei welcher ein Infrarotspektrometer einen Strahl einer Strahlung von einem Katalysator zerlegt, der einem Gas zur Auswertung ausgesetzt ist, um Adsorbaten auf ihm zu adsorbieren. Der Spektrometer gibt Spektraldaten entsprechend einer Wellenzahl des Strahls der Strahlung an einen Computer aus, der Referenzdaten gespeichert hat. Der Computer normiert die Spektraldaten und die Referenzdaten und berechnet dann ein Produkt der normierten Spektraldaten und der Referenzdaten. Danach wir eine Funktion des Produktes bezüglich der Wellenzahl differenziert, um eine Differentialfunktion zu erhalten. Folglich wir eine spezifizierte Wellenzahl bestimmt, für welche die Differentialfunktion gleich Null ist, so dass der gemeinsame Peak der Spektraldaten und der Referenzdaten bei der spezifierten Wellenzahl genau bestimmt ist.

Andererseits ist aus JP-A-2000249654 ist ein Spektrometer für die Aufnahme von Fourier transformierten Ramanspektren bekannt. Das Spektrometer hat einen gekühlten Messraum mit Stickstoffspühlung und eine Trocknungseinheit. Die Proben sind Holzstückchen, die von einem Roboter aus einem Probenbehälter entnommen und zum Spektrometer geführt werden. Der Messraum des Spektrometers ist gekühlt, um zu verhindern, dass die Proben bei der Messung entflammen. Jede Probe wird nur einmal gemessen und die Proben werden mittels einer multivarianten Analyse ausgewertet. Die Messungen dienen zur Qualitätskontrolle des gelieferten Holzpulps in der Papierindustrie.

Die hier beschriebene Einrichtung ist nicht geeignet für die Messung von Substanzen und Formulierungen, wie sie in der chemischen und pharmazeutischen Industrie benötigt werden. Ausserdem wird keine Stabilitätsmessung der Proben selber über einen längeren Zeitraum vorgenommen.

Der vorliegenden Erfindung liegt nun die Aufgabe zugrunde, eine Vorrichtung und ein Verfahren anzugeben, mittels welcher gesicherte Informationen über die physikalische und chemische Stabilität von Substanzen und Formulierungen auf eine sehr rasche und zerstörungsfreie Art vorliegen.

Diese Aufgabe wird durch eine Vorrichtung mit den Merkmalen des Patentanspruchs 1 und durch ein Verfahren mit den Merkmalen des Patentanspruchs 8 gelöst.

Mit der vorliegenden Erfindung wird diese Aufgabe durch eine Vorrichtung und ein Verfahren zur Bestimmung der physikalischen und chemischen Stabilität von Substanzen und Formulierungen auf der Grundlage von Spektraldaten gelöst, die mit Hilfe von geeigneten Vibrationsspektrometern (Mittelinfrarot-, Nahinfrarot-Ramanspekrometer) in kurzen Zeitabständen (Minuten, Stunden, Tage) vollautomatisch von unter kontrollierten Bedingungen (Temperatur bzw. Luftfeuchtigkeit bzw. Licht) gelagerten Substanzen und Formulierungen zerstörungsfrei aufgenommen werden.

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: eine schematische Darstellung einer Messvorrichtung,
- Fig. 2: ein Ablaufschema der Auswertung,
- Fig. 3: ein Streudiagramm der Hauptkomponenten,
- Fig. 4: ein Diagramm der mit den Koeffizienten der Regressionsrechnung gewichteten Hauptkomponenten,
- Fig. 5: ein Diagramm zur Darstellung der Veränderung aus den Scores, und
- Fig. 6: einen Probebehälter mit einer Abdampfvorrichtung, und
- Fig. 7: ein Probegefäss mit mehreren Vertiefungen und einer Abdampfvorrichtung für mehrere Probebehälter.

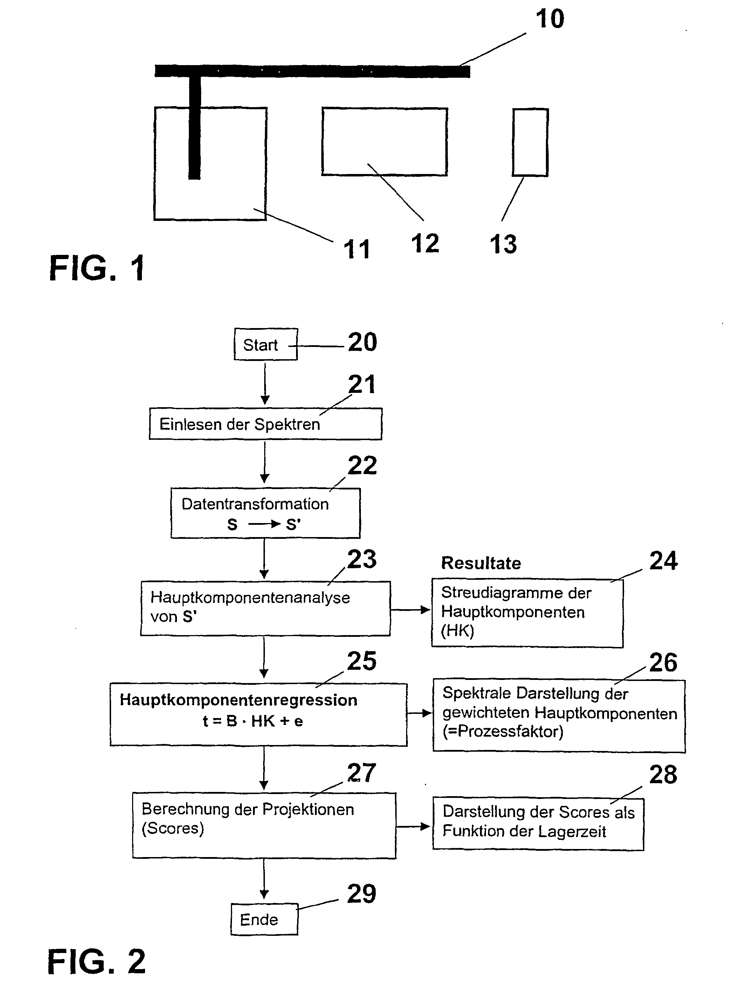

In Figur 1 ist rein schematisch ein an sich in chemischen Labors bekannter Transportroboter 10 dargestellt, der zwischen einen Lagerbehälter 11 und ein Spektrometer 12 von einem Computer 13 hin- und herbewegt werden kann. Die Proben werden in einem nicht-dargestellten Probengefäss vom Transportroboter 10 vom Lagerbehälter 11 zum Spektrometer 12 transportiert, wo die Spektren aufgenommen werden. Anschliessend transportiert der Roboter 10 die Proben wieder zum Lagerbehälter 11 zurück. Die Bewegungsabläufe sind nun mittels des Computers 13 so programmiert, dass die Messungen bei denselben Messbedingungen (Temperatur, Lichteinstrahlung, relative Feuchte) erfolgen.

Zur Durchführung von physikalischen und chemischen Stabilitätsstudien werden bei der hier vorgestellten Methode von einer bei definierten Lagerbedingungen eingelagerten Probe einer Substanz oder Formulierung automatisch in regelmässigen Zeitabständen (Minuten, Stunden, Tage) Vibrationsspektren unter gleichen Messbedingungen mit dem Spektrometer 12 aufgenommen. Mittelinfrarot-, Nahinfrarot- und Ramanspektroskopie sind für diese Studien geeignete vibrationsspekroskopische Methoden. Die aufgenommenen Spektren jeder Probe werden im Computer 13 als Rohdaten abgespeichert, wobei jedes Spektrum mit der Probenummer, den Lagerbedingungen und dem Zeitpunkt der Messung mit einem Index versehen ist. Die Auswertung der Rohdaten geschieht durch statistische Datenanalyse. Sie beginnt für jede Probe automatisch sobald die Anzahl auf dem Computer 13 abgespeicherten Spektren für eine sinnvolle Auswertung hinreichend ist und wird neu berechnet sobald neue Spektren der Probe aufgenommen werden. Auf die aktuellen Ergebnisse der Auswertung kann jederzeit zugegriffen werden.

Der Ablauf der automatischen Datenauswertung geschieht nach dem im Schema in der Figur 2 angegebenen Verfahren:

Beim Start 20 wird die Messung vom Computer 13 ausgelöst. Der erste Schritt 21 besteht in der Bildung eines Datensatzes der aus allen Spektren S einer Probe bei bestimmten Lagerbedingungen besteht, wonach aus den in den Computer 13 eingelesenen Spektren ein Vektor **S** gebildet wird. Sodann wird im Schritt 22 eine Datentransformation **S → S'** durchgeführt, z. B. durch Subtraktion einer Basislinie von jedem Spektrum im Vektor S. Die Auswertung beginnt mit den Spektren der Datentransformation von allen Spektren im Datensatz, die beispielsweise eine Basislinienkorrektur oder eine Vektornormierung beinhaltet. Der zweite Auswertungsschritt 23 besteht in der Analyse der Hauptkomponenten oder ähnlicher Transformationen von allen transformierten Spektren **S'** einer Probe. Daraus lassen sich die Streudiagramme 24 der Hauptkomponenten darstellen. Mit Hilfe mindestens einer der berechneten Hauptkomponenten und des Zeitpunktes der Messung jedes Spektrums wird anschliessend die systematische zeitliche Veränderung der Spektren mit Hilfe einer Regressionsrechung 25 der Hauptkomponenten gemäss der Formel **t** = **B * HK + e** ermittelt, wobei **t** der Vektor aus der Lagerzeit, **B** der Vektor mit den Regressionskoeffizienten, **HK** der Matrix mit den Hauptkomponenten und e der Vektor mit dem experimentellen Fehlern ist. Daraus ergibt sich dann die spektrale Darstellung 26 der Summe der mit den Regressionskoeffizienten gewichteten Hauptkomponenten **HK**. Die aus der Regressionsrechnung erhaltenen Ergebnisse ermöglichen qualitative und quantitative Aussagen über die physikalische und chemische Stabilität der Probe. Aus der Hauptkomponentenregression 25 lassen sich die Projektionen oder sogenannten Scores berechnen (Schritt 27), woraus die Scores als Funktion der Lagerzeit dargestellt werden können (Schritt 28). Nach der Berechnung der Scores wird das Verfahren mit Schritt 29 beendet und werden die Messungen an einer nächsten Probe fortgesetzt.

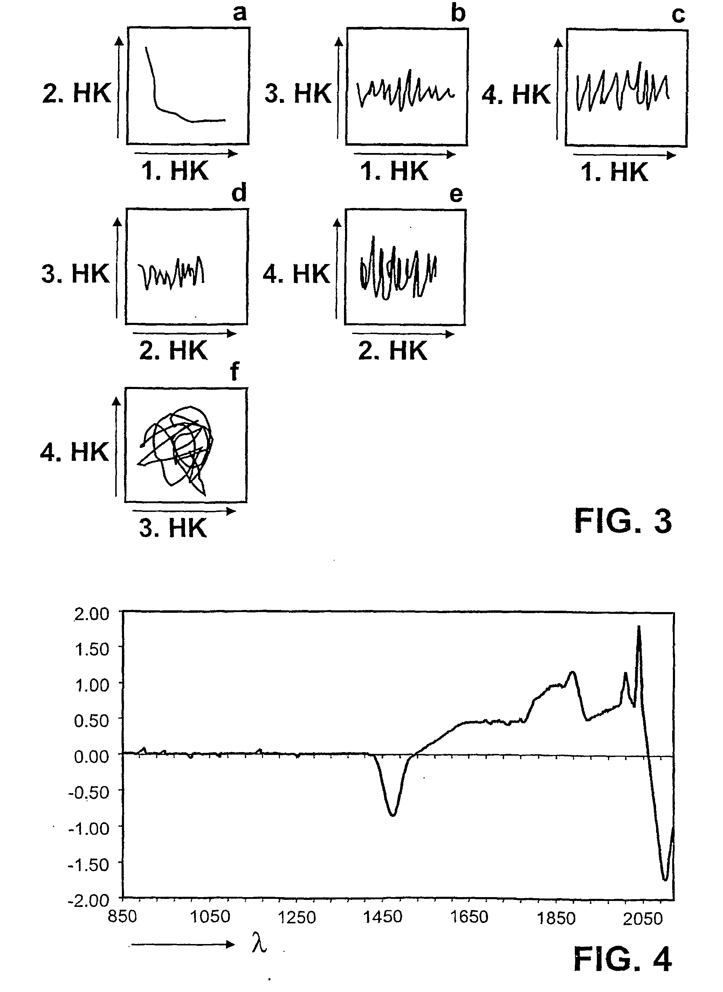

In Figur 3 sind die verschiedenen Hauptkomponenten 1.HK, 2.HK, 3.HK und 4. HK in Form eines jeweiligen Streudiagramms dargestellt. Diese ermöglichen Rückschlüsse über die Anzahl unabhängiger während der Lagerung der Probe ablaufender Prozesse. Dabei sind die einzelnen Spektren in den Diagrammen als Punkte dargestellt, die in zeitlicher Abfolge mit einer Linie verbunden werden. Aus dem Buch "Statische Datenanalyse - Eine Einführung für Naturwissenschaftler" von Werner A. Stahel, Vieweg 1995 können Einzelheiten über die Hauptkomponenten auf Seiten 307 und 308, über Streudiagramm im Kapitel 3.1, insbesondere Seiten 34 bis 36, und über den Matrix von Streudiagrammen in Kapitel 3.6, Seiten 48 bis 51 entnommen werden.

In Figur 4 ist ein Diagramm der Summe der mit den Koeffizienten der Regressionsrechnung gewichteten Hauptkomponenten (oder Prozessfaktor) dargestellt. Auf der x-Achse ist die Wellenlänge λ dargestellt, die y-Achse ist dimensionlos und zeigt die Intensitätsänderungen. Bei einer Wellenlänge von etwa 1450 nm gibt es eine deutliche Abnahme der Intensität, was auf eine Abnahme der Konzentration der Vibrationsschwingungen des zugehörigen Moleküls und somit auf verringerte Lagerfähigkeit schliessen lässt. Die mit den Koeffizienten der Regressionsrechung gewichteten Hauptkomponenten zeigen somit den Basisvektor für die zeitliche Drift der Spektren und haben die gleichen physikalischen Einheiten wie diese. Der Prozessfaktor ermöglicht Rückschlüsse zur Identifizierung der an den physikalischen und chemischen Veränderungsprozessen beteiligten Stoffe.

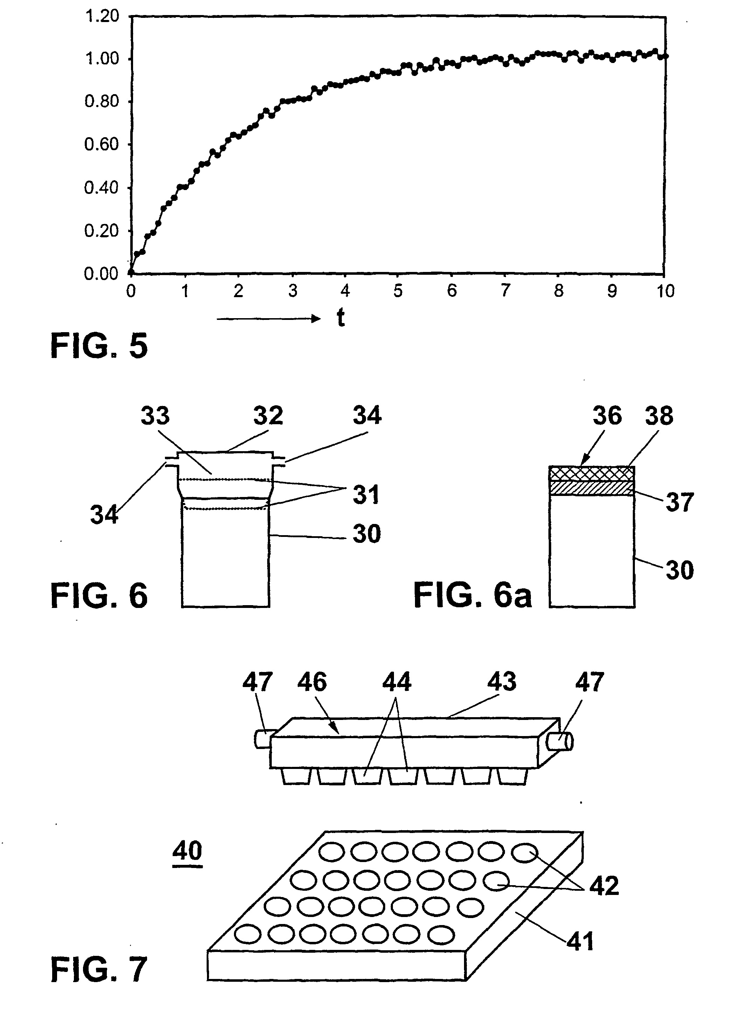

Durch mathematische Projektion der transformierten Spektren auf den berechneten Prozessfaktor werden die zugehörigen Scores erhalten. Die Scores sind im zeitlichen Ablauf in Figur 5 dargestellt. Zusammen mit dem Zeitpunkt t der Messung der Spektren ermöglichen sie Rückschlüsse über die Kinetik des physikalischen oder chemischen Veränderungsprozesses. In Verbindung mit dem Lambert-Beerschen Gesetz kann das Ausmass der Veränderung (z.B. der chemische Abbau) aus den Scores quantitativ ermittelt werden, sofern der Prozess aus den zugehörigen Loadings eindeutig einer in der Probe vorhandenen Substanz zugeordnet werden kann.

In Figur 6 ist ein Probegefäss 30 mit einem von Dichtungen 31 dicht abgeschlossenen Deckel 32 gezeigt. Im Deckel 32 ist ein Überstromkanal 33 vorgesehen, das an zwei gegenüberliegenden Seiten über Anschlüsse 34 mit hier nicht weiter dargestellten Schläuchen verbunden sind. Mit diesem Probegefäss können die Proben kontrolliert abgedampft werden. Dazu wird das Probegefäss 30 nach dem Einfüllen der Probeflüssigkeit mit dem Deckel 32 verschlossen und die Schläuche angeschlossen. Der Überstromkanal 33 wird sodann während der Lagerung bzw. des Abdampfens des Lösungsmittels mit einem Schutzgas in einem geregelten bzw. konstanten Gasfluss überströmt. Die Messungen der Vibrationsspektren erfolgt dann im Probegefäss 30. Andererseits kann das Probegefäss 30 auch hermetisch mit einer geeigneten Dichtung 36 abgeschlossen sein (siehe Fig. 6a), die aus einem mechanischen Verschluss 37 (z.B. Stopfen oder Drehverschluss) und einer darüber vergossenen und ausgehärteten Kunstharzschicht 38 besteht, welche den Verschluss 37 hermetisch abdichtet.

In Figur 7 ist eine weitere Ausführung eines Probegefässes 40 dargestellt, das aus einer Mikrotestplatte 41 mit mehreren Vertiefungen 42 und einer Abdampfvorrichtung 43 mit mehreren deckelartige Aufsätze 44 und einem Überstromkanal 46 mit Anschlüssen 47 besteht. Eine solche Mikrotestplatte 41 besteht bevorzugt aus Quarzglas und ist beispielsweise im Katalog 66/97-1 der Firma HELLMA GmbH & Co. D-79371 Müllheim auf Seite 155 beschrieben. Die Mikrotestplatte 41 wird nun zeilenweise mit der als Deckel ausgestalteten Abdampfvorrichtung 43 verschlossen. Der Überstromkanal 46 wird anschliessend während der Lagerung bzw. des Abdampfens des Lösungsmittels mit einem Schutzgas unter einem geregelten bzw. konstanten Gasfluss überströmt, das über an den Anschlüssen 47 angeschlossenen, hier nicht-dargestellten Schläuche fliesst. Die Messung der Vibrationsspektren (NIR, Raman) erfolgt nun in der jeweiligen Vertiefung von unten bzw. nach dem vollständigen Abdampfen des Lösungsmittels und dem Entfernen der Abdampfvorrichtung 43 von oben nach unten im Transmissionsmodus, oder mittels eines Infrarot- bzw. Ramanmikroskopes.

## Patentansprüche

1. Vorrichtung zur Bestimmung der physikalischen und chemischen Eigenschaften von Proben, mit einem Vibrationsspektrometer, einem Behälter (11) zur Lagerung der Proben, und einem Roboter (10) zum Transport der Proben zwischen dem Vibrationsspektrometer (12) und dem Behälter, **dadurch gekennzeichnet, dass** die Vorrichtung zur Stabilitätsmessung von Substanzen und Formulierungen als Proben derart ausgebildet ist, dass der Behälter (11) Mittel zur Einhaltung von definierten Lagerbedingungen der Proben aufweist, und ein Computer (13) vorgesehen ist, der eine Steuerung aufweist mit Aufnahmemitteln, um die Vibrationsspektren in regelmässigen Zeitabständen und unter gleichen Messbedingungen aufzunehmen, mit Speichermitteln, um die mittels des Vibrationsspektrometers aufgenommenen Spektren der Proben automatisch zu speichern, und mit Auswertemitteln, um die gespeicherten Vibrationsspektren mittels statistischer Datenanalyse auszuwerten.

2. Vorrichtung nach Anspruch 1, **dadurch gekennzeichnet, dass** das Vibrationsspektrometer (12) ein Mittelinfrarot-, Nahinfrarot- oder Ramanspektrometer ist.

3. Vorrichtung nach Anspruch 1 oder 2, **dadurch gekennzeichnet, dass** der Behälter (11) Sensoren zur Messung und Einhaltung der kontrollierten Bedingungen aufweist.

4. Vorrichtung nach Anspruch 3, **dadurch gekennzeichnet, dass** ein Lichtsensor und/oder ein Temperatursensor und/oder ein Feuchtesensor und/oder ein Sensor zur Messung der Gasatmosphäre im Behälter vorgesehen sind.

5. Vorrichtung nach Anspruch 1 oder 2, **dadurch gekennzeichnet, dass** der Behälter (30; 40) mit einer einen Überstromkanal (33; 46) aufweisenden Abdampfvorrichtung (32; 43) versehen ist, um die Proben unter kontrollierten Bedingungen abdampfen zu können.

6. Vorrichtung nach Anspruch 1 oder 2, **dadurch gekennzeichnet, dass** der Behälter (30) von einer Dichtung (36) hermetisch abgeschlossen ist.

7. Vorrichtung nach Anspruch 6, **dadurch gekennzeichnet, dass** die Dichtung (36) einen mechanischen Verschluss (37) und eine diesen abdichtende Kunstharzschicht (38) aufweist.

8. Verfahren zur Bestimmung der physikalischen und chemischen Lagerstabilität von Substanzen und Formulierungen, bei welchem Vibrationsspektren von Proben der Substanzen und Formulierungen in regelmässigen Zeitabständen aufgenommen werden, **dadurch gekennzeichnet, dass** jedes einzelne Vibrationsspektrum einer Probe mit der Probenummer, den Lagerbedingungen und dem Messzeitpunkt indiziert wird, die aufgenommenen und indizierten Vibrationsspektren in einem Computer als Rohdaten gespeichert werden, und sobald die Anzahl der gespeicherten Spektren einen vorbestimmten Schwellenwert überschritten hat, die Rohdaten jeder einzelnen Probe mittels statischer Datenanalyse ausgewertet wird.

9. Verfahren nach Anspruch 8, **dadurch gekennzeichnet, dass** jeweils ein Datensatz aus allen Spektren einer einzelnen Probe gebildet wird und die Spektren durch eine Datentransformation im Datensatz ausgewertet werden.

10. Verfahren nach Anspruch 9, **dadurch gekennzeichnet, dass** die Datentransformation eine Basislinienkorrektur oder eine Vektornormierung beinhaltet.

11. Verfahren nach einem der Ansprüche 9 oder 10, **dadurch gekennzeichnet, dass** alle transformierten Spektren einer einzelnen Probe in einer Hauptkomponentenanalyse oder einer ähnlichen Transformation ausgewertet werden und die systematische zeitliche Veränderung der Spektren mittels Regressionsrechnung der Hauptkomponenten ermittelt wird.

## Claims

1. An apparatus for determining the physical and chemical properties of samples, comprising a vibration spectrometer, a container (11) for storing the samples, and a robot (10) for transporting the samples between the vibration spectrometer (12) and the container, **characterized in that** the apparatus for measuring the stability of substances and formulations as samples is configured in such a way that the container (11) comprises means for observing defined storage conditions of the samples, and a computer (13) is provided which comprises a control unit with recording means in order to record vibration spectra in regular intervals and under the same measuring conditions, storage means in order to automatically storage the spectra of the samples which are recorded by means of the vibration spectrometer, and with evaluation means in order to evaluate the stored vibration spectra by means of statistical data analysis.

2. An apparatus according to claim 1, **characterized in that** the vibration spectrometer (12) is a medium infrared, near infrared, or Raman spectrometer.

3. An apparatus according to claim 1 or 2, **characterized in that** the container (11) comprises sensors for measuring and maintaining the controlled conditions.

4. An apparatus according to claim 3, **characterized in that** a light sensor and/or a temperature sensor and/or a humidity sensor and/or a sensor for measuring the gas atmosphere in the container are provided.

5. An apparatus according to claim 1 or 2, **characterized in that** the container (30; 40) is provided with an evaporation apparatus (32; 43) comprising an overflow conduit (33, 46) in order to enable the evaporation of the samples under controlled conditions.

6. An apparatus according to claim 1 or 2, **characterized in that** the container (30) is hermetically sealed by a seal (36).

7. An apparatus according to claim 6, **characterized in that** the seal (36) comprises a mechanical seal (37) and an artificial resin layer (38) which seals the same.

8. A method for determining the physical and chemical storage stability of substances and formulations, in which vibration spectra of samples of substances and formulations are recorded in regular intervals, **characterized in that** every single vibration spectrum of a sample is indexed with the sample number, the storage conditions and the measuring time, the recorded and indexed vibration spectra are stored in a computer as raw data, and the raw data of every single sample is evaluated by means of statistical data analysis once the number of stored spectra has exceeded a predetermined threshold value.

9. A method according to claim 8, **characterized in that** one data record is formed from all spectra of a single sample and the spectra are evaluated by a data transformation in the data record.

10. A method according to claim 9, **characterized in that** the data transformation comprises a baseline correction or vector normalization.

11. A method according to one of the claims 9 or 10, **characterized in that** all transformed spectra of an individual sample are evaluated in a main component analysis or a similar transformation and the systematic temporal change of the spectra is determined by means of regression computation of the main components.

## Revendications

1. Dispositif pour la détermination des propriétés physiques et chimiques d'échantillons avec un spectromètre à vibration, un récipient (11) pour le stockage des échantillons et un robot (10) pour le transport des échantillons entre le spectromètre à vibration (12) et le récipient **caractérisé en ce que** le dispositif pour la mesure de la stabilité de substances et de formules en tant qu'échantillons est réalisé de sorte que récipient (11) présente des moyens pour le respect de conditions de stockage définies des échantillons et il est prévu un ordinateur (13) qui présente une commande avec des moyens d'enregistrement pour enregistrer les spectres de vibration à des intervalles de temps réguliers et dans des conditions de mesure identiques, des moyens de stockage pour stocker automatiquement les spectres d'échantillons enregistrés au moyen du spectromètre à vibrations et de moyens d'analyse pour évaluer les spectres de vibration stockés au moyen de l'analyse de données statiques.

2. Dispositif selon la revendication 1, **caractérisé en ce que** le spectromètre à vibrations (12) est un spectromètre Raman, à infrarouge moyen et proche.

3. Dispositif selon la revendication 1 ou 2, **caractérisé en ce que** le récipient (11) présente des capteurs pour la mesure et le respect des conditions contrôlées.

4. Dispositif selon la revendication 3, **caractérisé en ce qu'**un capteur de lumière et/ou un capteur thermique et/ou un capteur d'humidité et/ou un capteur pour la mesure de l'atmosphère de gaz sont prévus dans le récipient.

5. Dispositif selon la revendication 1 ou 2, **caractérisé en ce que** le récipient (30; 40) est muni d'un dispositif de vaporisation (32; 43) présentant un canal de trop-plein (33; 46) pour pouvoir vaporiser les échantillons dans des conditions contrôlées.

6. Dispositif selon la revendication 1 ou 2, **caractérisé en ce que** le récipient (30) est fermé hermétiquement par une garniture d'étanchéité (36).

7. Dispositif selon la revendication 6, **caractérisé en ce que** la garniture (36) présente une fermeture mécanique (37) et une couche de résine dure étanche (38).

8. Procédé pour la détermination de la stabilité physique et chimique de substances et de formules, où les spectres de vibration des substances et formules sont enregistrés à des intervalles de temps réguliers, **caractérisé en ce que** chaque spectre de vibration de l'échantillon est indexé avec le numéro d'échantillon, les conditions de stockage et le moment de mesure, **en ce que** les spectres de vibration indexés et enregistrés sont stockés en tant que données brutes dans un ordinateur et dès que le nombre des spectres stockés a dépassé une valeur seuil prédéterminée, les données brutes de chaque échantillon sont évaluées au moyen d'une analyse statique de données.

9. Procédé selon la revendication 8, **caractérisé en ce que** respectivement un jeu de données est formé à partir de tous les spectres d'un seul échantillon et les spectres sont analysés dans le jeu de données par une transformation de données.

10. Procédé selon la revendication 9, **caractérisé en ce que** la transformation de donnés contient une correction de ligne de base ou une normalisation de vecteur.

11. Procédé selon l'une des revendications 9 à 10, **caractérisé en ce que** tous les spectres transformés d'un échantillon unique sont analysés et la modification systématique temporelle des spectres est déterminée au moyen du calcul de régression des composantes principales.
